# EUROPÄISCHE PATENTSCHRIFT

(11) **EP 2 977 656 B1**
(45) Veröffentlichungstag und Bekanntmachung des Hinweises auf die Patenterteilung: **13.09.2017**
(21) Anmeldenummer: 15177705.9
(22) Anmeldetag: 21.07.2015
(51) Int. Cl.: F16K 1/42, F16K 47/04, F16K 1/38, F16K 25/00

(54) **STELLARMATUR**
REGULATING VALVE
VANNE A SIEGE

(30) Priorität: 21.07.2014 DE 102014110246
(43) Veröffentlichungstag der Anmeldung: 27.01.2016
(73) Patentinhaber: Samson AG, 60314 Frankfurt (DE)
(72) Erfinder: Eckholz, Holger, 65611 Brechen (DE)
(74) Vertreter: Puschmann Borchert Bardehle Patentanwälte Partnerschaft mbB

(56) Entgegenhaltungen:
- EP-A1- 1 757 850
- WO-A2-2004/092622
- BE-A6- 1 009 354
- GB-A- 835 367
- US-A- 2 866 477
- US-A- 3 521 852
- US-A- 4 047 695
- US-A1- 2011 226 980

## Beschreibung

Die Erfindung betrifft eine Stellarmatur gemäß der im Oberbegriff des Patentanspruchs 1 angegebenen Art.

Die EP 2 547 936 B1 offenbart einen nicht-keramischen Ventilsitz, der einen keramischen HülsenEinsatz aufweist, wobei ein Stellelement vorgesehen ist, das ein Verschlusselement mit einem Sperrbereich aufweist, der mit dem Ventilsitz absperrend zusammenwirkt, und einen keramischen Drosselbereich aufweist, der mit dem keramischen Hülseneinsatz zusammenwirkt.

Die DE 31 48 521 A1 offenbart ein Drosselventil, bei welchem auf rostfreiem Stahl eine superharte Beschichtung im Bereich der Drosselöffnung aufgebracht wird. Diese Vorgehensweise hat den Nachteil, dass nach Verschleiß der Schicht das Ventil getauscht werden muss.

US 3,521,852 offenbart eine Stellarmatur nach dem Oberbegriff des Anspruchs 1. EP 1 757 850 A1 offenbart eine Stellarmatur mit einem Stellelement, das zwei Teile umfasst.

Es ist Aufgabe der Erfindung, eine Stellarmatur anzugeben, die eine Drosselfunktion und eine Absperrfunktion hat, wobei eine hohe Lebensdauer der Stellarmatur, insbesondere bei Verwendung von abrasiven Medien, erreicht werden soll.

Die Erfindung wird definiert durch eine Stellarmatur nach Anspruch 1.

In bekannter Weise umfasst eine Stellarmatur zum Stellen eines Fluidstroms ein Ventilgehäuse und ein Stellelement, das einen Sperrbereich und einen Drosselbereich aufweist. Der Sperrbereich des Stellelements kann vorzugsweise kegelförmig ausgebildet sein. Der Drosselbereich, der insbesondere dem Sperrbereich in Richtung des Ventilsitzes nachgeordnet ist, kann ausgehend von einer zylindrischen Gestaltung sich verjüngend ausgebildet sein. Ferner ist ein Ventilsitz vorgesehen, der einen Dichtbereich und einen Drosselöffnungsbereich aufweist, wobei der Sperrbereich des Stellelements mit dem Dichtbereich des Ventilsitzes derart zusammenwirkt, dass eine Absperrung des Fluidstroms ermöglicht wird, und der Drosselbereich des Stellelements mit dem Drosselöffnungsbereich des Ventilsitzes derart zusammenwirkt, dass eine Einstellung eines definierten Fluidstroms ermöglicht wird. Vorzugsweise kann der Dichtbereich eine konische Abschrägung aufweisen. Der Drosselöffnungsbereich ist insbesondere in Form eines hohlzylindrischen Elements ausgebildet. Ferner sind der Drosselöffnungsbereich und der Dichtbereich wenigstens oberflächlich aus demselben Hart-Material gebildet.

Erfindungsgemäß ist vorgesehen, dass der Ventilsitz in Form eines Ventilsitz-Einsatzes ausgebildet ist, der den Drosselöffnungsbereich und den Dichtbereich aufweist, wobei der Ventilsitz-Einsatz in das Ventilgehäuse eingesetzt ist.

Der Ventilsitz-Einsatz kann mittelbar oder unmittelbar in das Ventilgehäuse eingesetzt sein.

Dies hat den Vorteil, dass gerade bei Förderung von abriebintensiven Medien durch einen Ventilsitz-Einsatz, auf welchen eine Beschichtung aus hartem Material aufgebracht ist, die Standzeit des Ventils durch einen Austausch des Ventilsitzes zusätzlich zur harten Beschichtung erhöht werden kann. Insbesondere weist das Hart-Material eine Härte von mehr als 65 HRc auf. Das Hart-Material kann Keramik, Hartmetall oder Stellit sein. Es kann auch aus einem gehärteten Material bestehen. Vorzugsweise kann der Ventilsitz-Einsatz einteilig aus Vollmaterial gebildet sein.

Es kann vorgesehen sein, dass die Dichtkante, die der Dichtbereich mit dem Sperrbereich bildet, im Durchmesser größer ist, als der Durchmesser der Öffnung im Drosselöffnungsbereich. Erfindungsgemäß weist das Stellelement im Sperrbereich ein Material mit einer Härte auf, die um wenigstens 10 HRc (Rockwell) geringer ist als die Härte des Hart-Materials des Ventilsitz-Einsatzes. Dies erhöht die Dichtigkeit des Ventils, wobei vorzugsweise die weiche Dichtkante nicht im Hauptströmungsbereich des Ventils liegt.

Vorzugsweise kann der Ventilsitz-Einsatz einstückig aus einem Material ausgebildet sein. In einer bevorzugten Ausgestaltung kann das Hart-Material des Ventilsitz-Einsatzes aus Keramik, Hartmetall oder Stellit gebildet sein.

Ferner kann das Stellelement im Drosselbereich ein gehärtetes Material mit einer Härte von mehr als 70 HRc aufweisen. Dadurch wird, wenn der Drosselöffnungsbereich ebenfalls aus einem Material mit einer Härte von mehr als 70 HRc gebildet ist, eine Gleichbelastung von Stellelement im Drosselbereich und Drosselöffnungsbereich im Ventilsitz gewährleistet. Erfindungsgemäß umfasst das Stellelement zwei Teile, wobei das Stellelement im Sperrbereich ein Material mit einer Härte von weniger als 50 HRc aufweist und im Drosselbereich ein Hartmetall, Keramik, Stellit und/oder ein Material mit einer Härte von mehr als 65 HRc aufweist. In Kombination mit der Gestaltung des Ventilsitz-Einsatzes aus Hartmetall, Keramik, Stellit und/oder einem Material mit einer Härte von mehr als 65 HRc, wird eine hohe Verschleißfestigkeit bei idealer Verschlusswirkung erreicht. Durch den weicheren Sperrbereich kann die durch hohe Anpresskräfte und bei schlagender Antriebsbeanspruchung vorliegende Bruchgefahr des harten und damit spröden Materials deutlich reduziert werden. Aufgrund der Austauschbarkeit des Ventilsitz-Einsatzes und Stellelement, kann die Verwendungsdauer der Stellarmatur auch bei Beschädigung des Ventilsitz-Einsatzes erheblich erhöht werden.

In einer besonders vorteilhaften Ausgestaltung ist der Drosselbereich des Stellelements als auch der Ventilsitz-Einsatz aus Keramik ausgebildet.

Bevorzugt kann der Drosselbereich einen Leerhub-Bereich und einen Steuerbereich aufweisen, wobei im Leerhub-Bereich eine Änderung der Lage des Stellelements relativ zur Drosselöffnung keine signifikante Änderung im Strömungsverhalten zur Folge hat, wobei der Leerhub-Bereich zwischen Steuerbereich und Sperrbereich liegt. Insbesondere liegt dabei der Drosselöffnungsbereich und der Dichtbereich in Hubrichtung beabstandet zueinander.

Dadurch kann der Sperrbereich vom Dichtbereich des Stellelements entsprechend dem Leerhub-Bereich beabstandet sein, bevor der Fluidstrom durch den Steuerbereich endgültig freigegeben wird. Dadurch entsteht eine geringere Druckdifferenz am Sperrbereich und Dichtbereich, wodurch der Verschleiß in diesem Bereich reduziert werden kann.

Ferner kann in vorteilhafter Weise vorgesehen sein, dass der Drosselbereich und der Sperrbereich des Stellelements zweiteilig ausgebildet sind. Insbesondere sind der Drosselbereich aus Keramik und der Sperrbereich aus einem weichen Metall ausgebildet. Im Übergang kann ein elastisches Element wie z.B. Graphit oder Elastomer-Element angeordnet sein, das die Keramikteile vor Schlägen schützt und auch zum Toleranzausgleich beitragen kann. Ein solcher elastischer Übergang kann auch für den Übergang zwischen dem Sperrbereich und dem übrigen Stellglied, insbesondere der Stellstange vorgesehen sein. Die Verbindung der über den elastischen Übergang der verbundenen Element kann durch Bördeln, Einpressen, Klemmen, Kleben, Löten erfolgen Erfindungsgemäß ist der Ventilsitz-Einsatz über eine Zwischenbuchse in das Ventilgehäuse eingesetzt. Der Ventilsitz-Einsatz kann insbesondere in die Zwischenbuchse eingepresst, eingeklebt, mittels Sicherungselementen fixiert sein und/oder in Axialrichtung elastisch gelagert sein. Die Zwischenbuchse kann in verschiedenen Ausgestaltungen ausgeführt sein und beispielsweise über eine Presspassung, durch Sicherungsringe fixiert oder in Form einer Einschraubbuchse über ein Schraubgewinde in das Ventilgehäuse eingesetzt werden.

Durch die Ausführung einer Zwischenbuchse wird eine besonders gute Austauschbarkeit des Ventilsitz-Einsatzes in das Ventilgehäuse gewährleistet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Schnittansicht einer erfindungsgemäßen Stellarmatur in dichtendem Betriebszustand;
- Fig. 2: eine schematische Schnittansicht einer erfindungsgemäßen Stellarmatur in steuerndem Betriebszustand;
- Fig. 3: eine schematische Schnittansicht einer erfindungsgemäßen Stellarmatur mit elastischer Anbindung des Sperrbereichs in beendetem Betriebszustand;
- Fig. 4: eine schematische Schnittansicht einer erfindungsgemäßen Stellarmatur umfassend den Ventilsitz, und
- Fig. 5: eine schematische Schnittansicht einer erfindungsgemäßen Stellarmatur umfassend eine Einschraubbuchse eines eingesetzten Ventilsitz-Einsatzes.

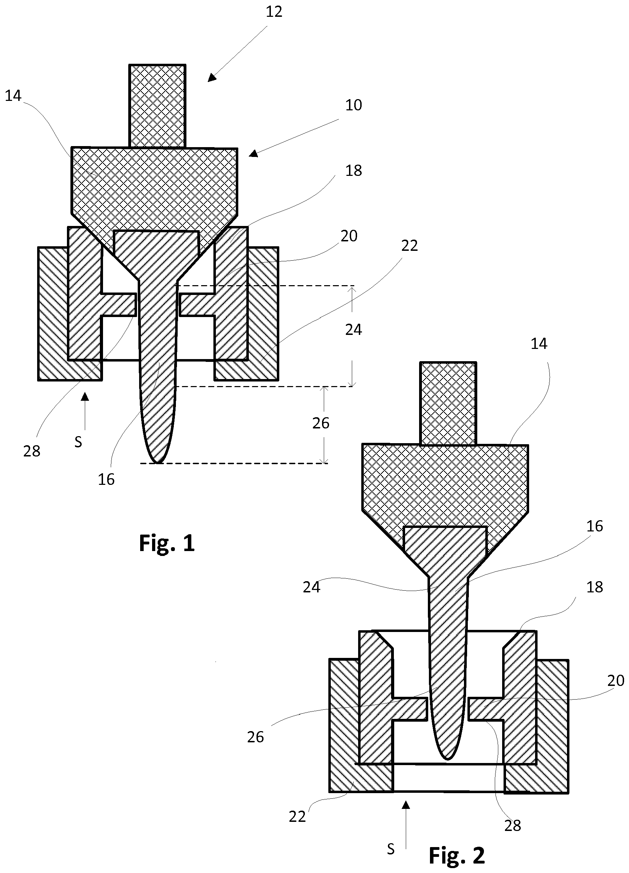

Fig. 1 zeigt eine schematische Schnittansicht einer erfindungsgemäßen Stellarmatur 10 in dichtendem Betriebszustand. Die Stellarmatur 10 umfasst ein translatorisch verstellbares Stellelement 12, das mit einem Ventilsitz-Einsatz 20 zusammenwirken kann. Für einen abdichtenden Betriebszustand umfasst das Stellelement einen Sperrbereich 14 und für einen steuernden Betrieb einen Drosselbereich 16.

Der Sperrbereich 14 des Stellelements 12 ist aus einem weichen Metall mit einer Rockwell- Härte von weniger als 50 HRc ausgebildet. Der Ventilsitz-Einsatz 20, der aus Keramik hergestellt ist, ist in das schematisch dargestellte Ventilgehäuse 22 eingesetzt.

Liegt der Sperrbereich 14 an dem Dichtbereich 18 des Ventilsitz-Einsatzes 20 an, wird die Durchströmung unterbunden. Eine gewisse Leckage innerhalb der Leckageklasse lässt sich jedoch nicht vermeiden. Der Drosselbereich 16 umfasst einen Leerhub-Bereich 24 sowie einen Steuerbereich 26. Befindet sich das Stellelement 12 mit seinem Leerhub-Bereich 24 auf Höhe der Drosselöffnung 28 soll aufgrund der Ausgestaltung des Leerhub-Bereichs 24 die Strömung bei beliebiger Stellung des Stellelementes innerhalb des Leehub-Bereichs 24 nahezu unverändert bleiben. Die Strömung ist abhängig von dem Strömungsquerschnitt zwischen der Drosselöffnung 28 und dem Durchmesser des Stellelementes im Leerhub-Bereich 24.

Eine bewusste Modulation der Strömung kann erfolgen, sobald sich der Steuerbereich 26 auf Höhe der Drosselöffnung 28 befindet, wie es in Fig. 2 dargestellt ist.

In Fig. 2 ist der aus Keramik ausbildete Drosselbereich 16 in dem Betriebszustand zur Steuerung der Strömung S dargestellt. Wie Fig. 2 zu entnehmen ist, ist aufgrund des Leerhub-Bereichs 24 bereits eine Distanz zwischen dem Sperrbereich 14 und dem Dichtbereich 18 des Ventilsitz-Einsatzes 20 erreicht, wenn eine Steuerung des Fluidstroms einsetzt. Der Leerhub-Bereich 24 soll mindestens so groß ausgelegt sein, dass der Querschnitt der Öffnung des Dichtbereichs 18 größer ist als der Strömungsquerschnitts im Leerhub-Bereich 24 bevor die bewusste Modulation der Strömung im Steuerbereich 26 beginnt. Aufgrund der Beabstandung des Sperrbereichs 14 von dem Dichtbereich 18 des Ventilsitz-Einsatzes 20 kann eine Abnutzung des Sperrbereichs 14, der im Gegensatz zum Ventil-Einsatz 20 aus weicherem Metall gebildet ist, verhindert werden.

Der der Strömung ausgesetzte Drosselbereich 16, ist insbesondere in seinem Steuerbereich 26 ebenfalls keramisch ausgebildet, wodurch aufgrund der Härte des Materials eine Abnutzung des Stellelements effektiv vermieden wird. Der Ventilsitz-Einsatz 20 ist im Drosselöffnungsbereich 46 genau wie im Dichtbereich 18 aus Keramik-Material gebildet. Dieser ist als Einsatz direkt in das Ventilgehäuse 22 eingesetzt.

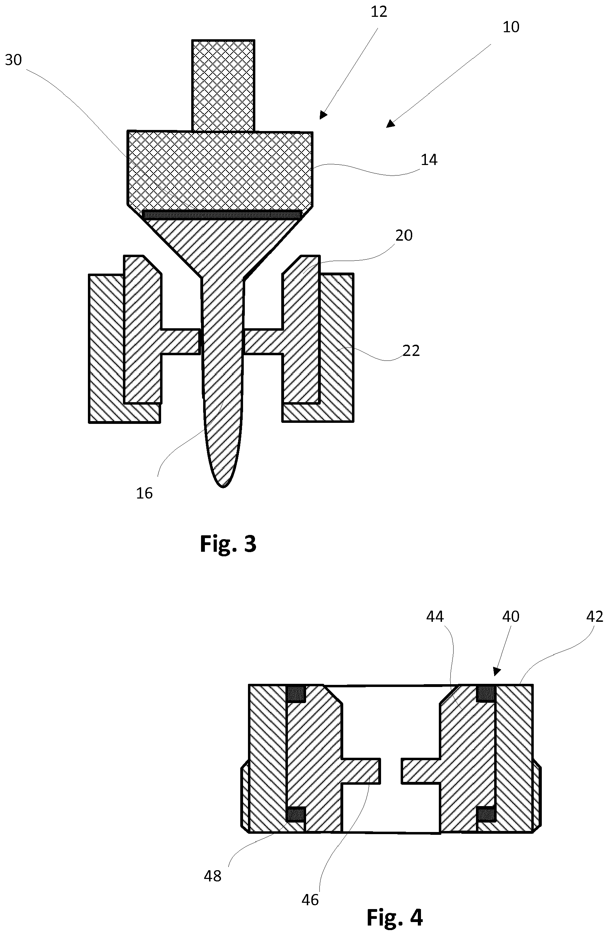

Fig. 3 zeigt eine Schnittansicht eines Stellelements 12 mit einem Ventilsitz 20, der in einem Ventilgehäuse 22 eingebracht ist.

Im Unterschied zu der in Fig. 1 und 2 gezeigten Ausführungsform weist die Ausführungsform gemäß Fig. 3 zwischen dem Sperrbereich 14 und dem übrigen Stellelement ein elastisches Element 30 auf. In dieser Ausführungsform ist der Sperrbereich 14 des Stellelements ebenfalls aus Keramik ausgebildet. Durch die Verbindung des Sperrbereichs 14 des Stellelements über ein elastisches Element 30 kann der auf den Sperrbereich 14 und Dichtbereich 18 wirkende Druck reduziert werden, was die Bruchfestigkeit des spröden Hartmetalls oder Keramik-Materials verbessert.

Fig. 4 zeigt eine Schnittansicht einer erfindungsgemäßen Einschraubbuchse 42, die eine aus hartem Metall oder Keramik bestehenden Ventilsitz-Einsatz 40 eingepresst hat, wobei der Ventilsitz 40 den Dichtbereich 44 und den Drosselöffnungsbereich 46 bildet. Eine Einschraubbuchse 42 stellt eine besonders vorteilhafte Gestaltung einer Zwischenbuchse dar.

Der Ventilsitz-Einsatz 40 ist über einen elastischen Ring 48 gegenüber der Einschraubbuchse 42 elastisch gelagert und mittels z.B. einem Sicherungsring gegen herausfallen gesichert. Dadurch können durch das Stellelement verursachte Anschläge oder hohe Flächenpressungen aufgefangen werden, was die Haltbarkeit des spröden Ventilsitz-Einsatzes 40 erheblich erhöht. Insbesondere, wenn das Stellelement an seinem Sperrbereich ebenfalls eine hohe Härte aufweist, kann eine solche Gestaltung der Einschraubbuchse 42 die Lebensdauer des Ventilsitzes 90 erheblich erhöhen. Die Einschraubbuchse 42 kann mittels eines komplementären Gewindes ins Ventilgehäuse eingeschraubt werden.

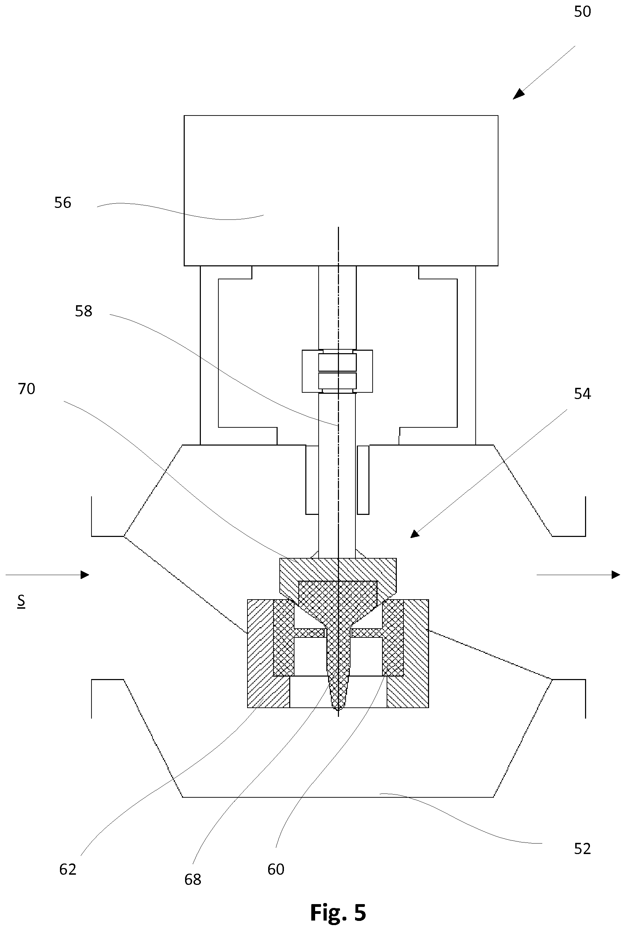

Fig. 5 zeigt eine schematische Ansicht einer Stellarmatur 50. Die Stellarmatur 50 umfasst ein Ventilgehäuse 52, ein Stellelement 54, das über eine Stellstange 58 an einen Stellantrieb 56 angekoppelt ist. Das Stellglied 54 wirkt mit einem in das Ventilgehäuse 52 eingesetzten Ventilsitz-Einsatz 60 zusammen. Wie in den vorangehenden Figuren beschrieben, ist der Ventilsitz-Einsatz 60 über eine Zwischenbuchse 62 in das Ventilgehäuse 52 eingesetzt. Das Stellelement 54 ist in dieser Ausgestaltung zweiteilig ausgebildet und weist in dieser Ausgestaltung einen Drosselbereich 68 und einen Sperrbereich 70 auf. Der Sperrbereich 70 ist aus einem Material gebildet, das um wenigstens 10 HRc weicher ist als der Ventilsitz-Einsatz 60.

### Bezugszeichenliste

- 10: Stellarmatur
- 12: Stellelement
- 14: Sperrbereich
- 16: Drosselbereich
- 18: Dichtbereich
- 20: Ventilsitz
- 22: Ventilgehäuse
- 24: Leerhub-Bereich
- 26: Steuerbereich
- 28: Drosselöffnung
- 30: elastisches Element
- 40: Ventilsitz
- 42: Einschraubbuchse
- 44: Dichtbereich
- 46: Drosselöffnungsbereich
- 48: elastischer Ring
- 50: Stellarmatur
- 52: Ventilgehäuse
- 54: Stellelement
- 56: Stellantrieb
- 58: Stellstange
- 60: Ventilsitz-Einsatz
- 62: Zwischenbuchse
- 68: Drosselbereich
- 70: Sperrbereich

## Patentansprüche

1. Stellarmatur (10) zum Stellen eines Fluidstroms umfassend ein Ventilgehäuse (22) und ein translatorisch bewegbares Stellelement (12), das einen Sperrbereich (14, 70) und einen Drosselbereich (16) aufweist, wobei ferner ein Ventilsitz vorgesehen ist, der einen Dichtbereich (18, 44) und einen Drosselöffnungsbereich (28, 46) aufweist, wobei der Sperrbereich (14, 70) des Stellelements (12) eingerichtet ist mit dem Dichtbereich (18, 44) des Ventilsitzes (20, 40) derart zusammenzuwirken, dass eine Absperrung des Fluidstroms ermöglicht wird und der Drosselbereich (16) des Stellelements (12, 54) eingerichtet ist mit dem Drosselöffnungsbereich (28, 46) des Ventilsitzes (20, 40, 60) derart zusammenzuwirken, dass eine Einstellung eines definierten Fluidstroms ermöglicht wird, wobei ferner die Drosselöffnung (28) und der Dichtbereich (18, 44) wenigstens oberflächlich aus demselben Hart-Material gebildet sind, dass der Ventilsitz in Form eines Ventilsitz-Einsatzes (20, 40, 60) ausgebildet ist, der den Drosselöffnungsbereich (28, 46) und den Dichtbereich (18, 44) aufweist, wobei der Einsatz in das Ventilgehäuse eingesetzt ist, wobei das Hart-Material des Ventilsitz-Einsatzes (20, 40) gegenüber dem Material des Stellelementes (12) im Sperrbereich (14) mindestens 10 HRc härter ist, **dadurch gekennzeichnet, dass** der Ventilsitz-Einsatz (40) in eine Zwischenbuchse (42) eingepasst ist, die wiederum in das Ventilgehäuse eingesetzt ist, wobei das Stellelement zwei Teile umfasst, und wobei das Stellelement im Sperrbereich ein Material mit einer Härte von weniger als 50 HRc aufweist und im Drosselbereich ein Hartmetall, Keramik, Stellit und/ oder ein Material mit einer Härte von mehr als 65 HRc aufweist.

2. Stellarmatur nach Anspruch 1, **dadurch gekennzeichnet, dass** der Ventilsitz-Einsatz (20, 40) einteilig aus Vollmaterial ausgebildet ist.

3. Stellarmatur nach einem der vorangehenden Ansprüche, **dadurch gekennzeichnet, dass** das Hart-Material des Ventilsitz-Einsatzes (20, 40) aus Keramik, Hartmetall oder Stellit gebildet ist.

4. Stellarmatur nach einem der vorangehenden Ansprüche, **dadurch gekennzeichnet, dass** das Hart-Material ein gehärtetes Material mit einer Härte von mehr als 65 HRc ist.

5. Stellarmatur nach einem der vorangehenden Ansprüche, **dadurch gekennzeichnet, dass** das Stellelement (12) im Drosselbereich (16) aus Keramik, Hartmetall oder Stellit gebildet ist.

6. Stellarmatur nach einem der vorangehenden Ansprüche, **dadurch gekennzeichnet, dass** Drosselbereich (16) einen Leerhub-Bereich (24) und einen Steuerbereich (26) aufweist, wobei im Leerhub-Bereich (24) eine Änderung der Lage des Stellelements (12) relativ zur Drosselöffnung (28) keine signifikante Änderung im Strömungsverhalten zur Folge hat, wobei der Leerhub-Bereich (24) zwischen Steuerbereich (26) und Sperrbereich (14) liegt.

7. Stellarmatur nach Anspruch 6, **dadurch gekennzeichnet, dass** die Zwischenbuchse als Einschraubbuchse (42) ausgebildet ist.

8. Stellarmatur nach Anspruch 1, **dadurch gekennzeichnet, dass** der Ventilsitz-Einsatz (40) über ein elastisches Element (48) gegenüber der Zwischenbuchse gelagert ist.

## Claims

1. Regulating valve (10) for regulating a fluid flow, which regulating valve (10) comprises a valve housing (22) and a positioning element (12) which latter can be translationally moved and which includes a shut-off portion (14, 70) and a throttle portion (16), with a valve seat being furthermore provided, which valve seat includes a sealing portion (18, 44) and a throttle opening portion (28, 46), with the shut-off portion (14, 70) of said positioning element (12) being adapted to cooperate with the sealing portion (18, 44) of the valve seat (20, 40) so as to enable shut-off of the fluid flow, and the throttle portion (16) of the positioning element (12, 54) being adapted to cooperate with the throttle opening portion (28, 46) of the valve seat (20, 40, 60) so as to enable the setting of a defined fluid flow, with at least the surfaces of said throttle opening portion (28) and said sealing portion (18, 44) being furthermore made of the same hard material, with said valve seat being designed as a valve seat insert (20, 40, 60) which includes the throttle opening portion (28,46) and the sealing portion (18,44), said insert being inserted into the valve housing, with the hard material of said valve seat insert (20, 40) being harder by at least 10 HRc than the material of said positioning element (12) in the shut-off portion (14), **characterized in that** said valve seat insert (40) in fitted into an intermediate bush (42) which bush (42) in turn is mounted in the valve housing, that said positioning element comprises two parts and that the shut-off portion of said positioning element is made from a material of a hardness of less than 50 HRc, and that the throttle portion of said positioning element is made from a hard metal, a ceramic material, stellite and/or a material of a hardness of more than 65 HRc.

2. The regulating valve according to claim 1, **characterized in that** said valve seat insert (20, 40) is integrally formed from a solid material.

3. The regulating valve according to any one of the preceding claims, **characterized in that** the hard material of said valve seat insert (20, 40) is a ceramic material, a hard metal or stellite.

4. The regulating valve according to any one of the preceding claims, **characterized in that** said hard material is a hardened material of a hardness of more than 65 HRc.

5. The regulating valve according to any one of the preceding claims, **characterized in that** the throttle portion (16) of said positioning element (12) is made from a ceramic material, a hard metal or stellite.

6. The regulating valve according to any one of the preceding claims, **characterized in that** said throttle portion (16) includes an idle stroke section (24) and a control section (26), where any change in position of the positioning element (12) in the idle stroke section (24) relative to the throttle opening (28) will not result in a significant change of the flow behaviour, said idle stroke section (24) being located between the control section (26) and the shut-off portion (14).

7. The regulating valve according to claim 6, **characterized in that** said intermediate bush is designed as a threaded bush (42).

8. The regulating valve according to claim 1, **characterized in that** said valve seat insert (40) is supported on said intermediate bush (42) through an elastic element (48).

## Revendications

1. Vanne de réglage (10) servant à régler un courant de fluide, comprenant un carter de soupape (22) et un élément de réglage (12) qui est mobile en translation et qui comprend une zone de blocage (14, 70) et une zone d'étranglement (16), un siège de soupape étant en outre prévu, qui comprend une zone d'étanchéité (18, 44) et une zone d'ouverture d'étranglement (28, 46), la zone de blocage (14,70) de l'élément de réglage (12) étant conçue pour coopérer avec la zone d'étanchéité (18, 44) du siège de soupape (20, 40), de telle manière qu'un blocage du courant de fluide soit permis et la zone d'étranglement (16) de l'élément de réglage (12, 54) étant conçue pour coopérer avec la zone d'ouverture d'étranglement (28, 46) du siège de soupape (20, 40, 60), de telle manière qu'un réglage d'un courant de fluide défini soit permis, l'ouverture d'étranglement (28) et la zone d'étanchéité (18, 44) étant en outre faites au moins en surface du même matériau dur, que le siège de soupape soit réalisé sous la forme d'un insert de siège de soupape (20, 40, 60) qui comporte la zone d'ouverture d'étranglement (28, 46) et la zone d'étanchéité (18, 44), l'insert étant inséré dans le carter de soupape, le matériau dur de l'insert de siège de soupape (20, 40) étant d'au moins 10 HRc plus dur que le matériau de l'élément de réglage (12) dans la zone de blocage (14), **caractérisée en ce que** l'insert de siège de soupape (40) est emboîté dans un manchon intermédiaire (42) qui est inséré à son tour dans le carter de soupape, l'élément de réglage comprenant deux parties, et l'élément de réglage dans la zone de blocage comprenant un matériau présentant une dureté inférieure à 50 HRc et dans la zone d'étranglement un matériau dur, de la céramique, du stellite et/ou un matériau présentant une dureté supérieure à 65 HRc.

2. Vanne de réglage selon la revendication 1, **caractérisée en ce que** l'insert de siège de soupape (20, 40) est réalisé d'une seule pièce en matériau plein.

3. Vanne de réglage selon l'une quelconque des revendications précédentes, **caractérisé en ce que** le matériau dur de l'insert de siège de soupape (20, 40) est fait de céramique, de métal dur ou de stellite.

4. Vanne de réglage selon l'une quelconque des revendications précédentes, **caractérisée en ce que** le matériau dur est un matériau durci présentant une dureté supérieure à 65 HRc.

5. Vanne de réglage selon l'une quelconque des revendications précédentes, **caractérisée en ce que** l'élément de réglage (12) dans la zone d'étranglement (16) est fait de céramique, de métal dur ou de stellite.

6. Vanne de réglage selon l'une quelconque des revendications précédentes, **caractérisée en ce que** la zone d'étranglement (16) comprend une zone de course morte (24) et une zone de commande (26), une modification de la position de l'élément de réglage (12) par rapport à l'ouverture d'étranglement (28) dans la zone de course morte (24) n'entraînant aucune modification considérable du comportement d'écoulement, la zone de course morte (24) étant située entre la zone de commande (26) et la zone de blocage (14).

7. Vanne de réglage selon la revendication 6, **caractérisée en ce que** le manchon intermédiaire est réalisé sous la forme d'un manchon à visser (42).

8. Vanne de réglage selon la revendication 1, **caractérisée en ce que** l'insert de siège de soupape (40) est monté en vis-à-vis du manchon intermédiaire par l'intermédiaire d'un élément élastique (48).
